Europäisches Patentamt

European Patent Office

Office européen des brevets

(11) Publication number: **0 086 318**
**A1**

(12) **EUROPEAN PATENT APPLICATION**

(21) Application number: **82830031.9**

(22) Date of filing: **12.02.82**

(51) Int. Cl.³: **B 60 R 9/08**

(43) Date of publication of application: **24.08.83**
**Bulletin 83/34**

(84) Designated Contracting States: **CH DE FR GB IT LI**

(71) Applicant: **Cevenini, Franco, Viale 2 Giugno, 44, Ozzano dell'Emilia (Bologna) (IT)**

(72) Inventor: **Cevenini, Franco, Viale 2 Giugno, 44, Ozzano dell'Emilia (Bologna) (IT)**

(74) Representative: **Sassatelli, Franco, c/o INIP Ufficio Internazionale Brevetti per Deposito di Brevetti e Marchi via Mazzini, 170, I-40139 Bologna (IT)**

(54) **Working assembly for supporting a watercraft on a motor vehicle.**

(57) The invented device employs a flat rectangular trailer in profile for haulage, held on the intermediate part of the front cross member by a pirouet ting wheel and, on the back ends of the longitudinal members by a pair of wheels.

For transport, a truck carrier is foreseen with telescopic extensibility for adjustment to the car canopy shape. The watercraft carried on the truck is lifted on the front side and brought to lean on the first wheel pair of the truck carrier; a front wheel carrier is then detached, the back part is lifted too and brought in position by sliding on a wheel system, taking care to remove the remaining back wheel carriers.

- 1 -

"Working assembly for supporting a watercraft on a motor vehicle"

The invention refers to a device consisting of two components one of which can be fitted on the conopy of the motor vehicle and allows the integral support of the other component which at first acts as haulage truck for the movement on the ground and then as laying seat of the transported watercraft.

For the type of rubber and ordinary boats, two kinds of trucks are currently used: one type employs a longitudinal structure equipped with hollow leaning means and a wheel pair with central settling for allowing the pre-laying in water below the watercraft. This type is useful but in the hauling phase only and its employ is limited to the shore. The other type employs a front drive rudder which permits its movement on the ground and the connection to the motor vehicle for the transport on road.

The invented device allows to exclude the carried means through a contrivance which permits hauling, the motion on the ground and the road transport by fitting the watercraft on the car canopy.

The operating assembly essentially consists of two components: a truck for supporting the watercraft which can be settled for the phase of the road transport, and truck carrier previously fitted on the car canopy. The components are then made integrally working with the transport means by retention cables or other.

Hauling is possible by means of a flat truck with rectangular base in profile which, for the movement, employs a pirouetting wheel on the intermediate part of the front cross member and, on the back ends of the longitudinal members, a pair of wheels supported on projecting angular brackets. The said wheel can be quickly released by screw desactivation of the fastening means. The adjustment of the truck to the shape of the watercraft to carry has been foreseen according to two subsequent phases: by axial exstensibility for adjusting the setting base and by adjustment of the slant of the hollow devices to permit the containment of the settled means. For the base adjustment, two pairs of extensions are foreseen respectively in parallel and symmetrically projecting from the back cross member and the front intermediate one, and to be blocked in position. The condition of contact of the hollow devices, for obtaining the steady settling of the watercraft, can be reached by adjusting them when brought on the ends of the four extensions, and by stabiling them through pins passing in corresponding bores.

The support on the transport means is obtained through a truck carrier in profile which employs a pair of extensible cross members for the transversal adjustment and equipped on the ends with conventional scarfing components for fastening the assembly on the coachwork reliefs. These cross members bear above a pair of integral extensible longitudinal members for the longitudinal adjustment, supporting the back cross member bearing a pair of wheels near the upper ends.

On the relevant longitudinal directrices, the two cross members bear other two pairs of wheels. For the employ, hauling is carried out by laying the truck below the watercraft and bringing the assembly on the ground in corre spondence to the back side of the transport means. The charging phase can be executed by lifting at first the front part of the truck and leaning it on the first pair of wheels. The front wheel carrier is then removed. Subsequently also the back part is lifted and the truck carrier is laid by sliding on the system of six wheel translation, taking care to detach the two back wheel bearers before the end of the travel. In this way, the two device components are in superimposition and are altogether acting as support of the watercraft. The integrally operating condition of the watercraft with the transport means can be obtained with conventional retention cables.

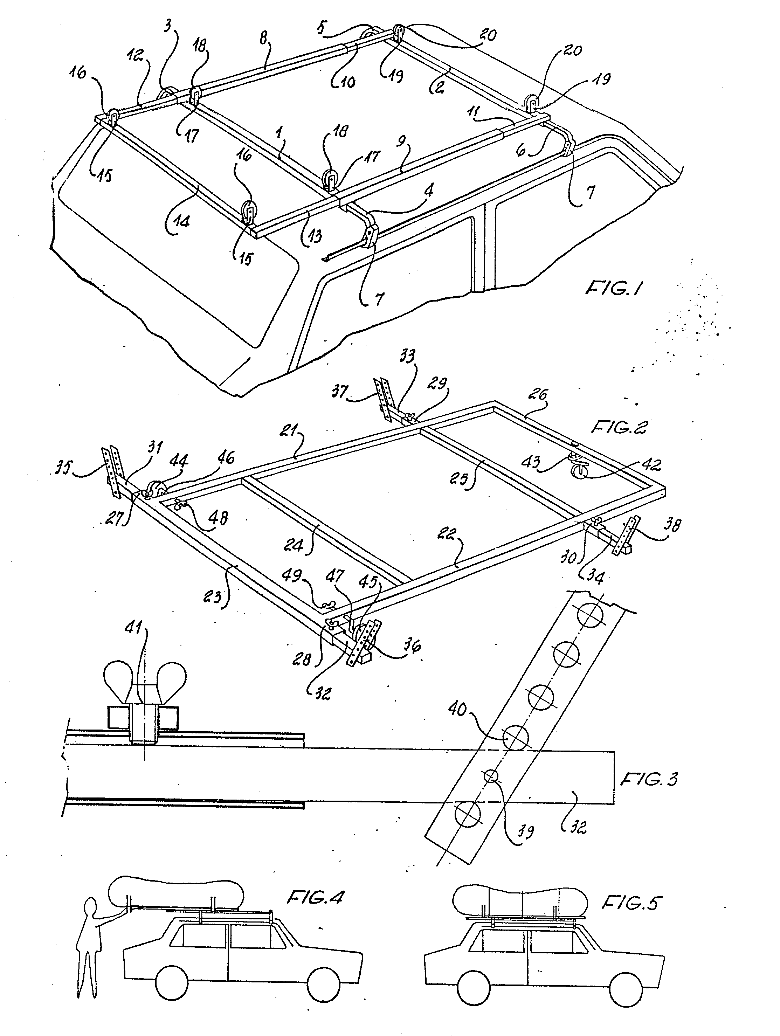

An execution version is illustrated by the drawings of Table 1, where fig.1 is the back side view of the canopy with a truck carrier fitted above it. Fig. 2 is the view of a truck showing the two pairs of extensions to be axially prolonged and the three movement wheels. Fig. 3 is a particular of longitudinal section on the end of an extension, with the view of the blocking means and partial view of the small bar acting as leaning hollow piece. Fig. 4 is the schematic view of the operator pushing the truck, bearing a rubber boat on it, of the sliding track of the truck bearer. Fig. 5 is a view in conformity with the previous one, with the watercraft fitted on the truck in transport position. The truck carrier employs -for the transversal adjustment- the pair of telescopic cross members with coaxial components 1 and 2 and axial ones 3, 4, 5 and 6 equipped on the four ends with pieces 7 scarfing on the pair of longitudinal reliefs on the coachwork. The longitudinal adjustment il possible through the pair of telescopic longitudinal members with coaxial components 8 and 9 integrally supported by cross member 1: from them axial profiles 10 and 11 are getting out from side, and are integrally brought on the end of cross piece 2. From the back side, axial profiles 12 and 13 are coming out which are connected on the ends by cross member 14: this one supports two wheels 16 on a pair of lugs. The sliding truck is completed by the pair of lugs 17 bearing the two wheels 18 on cross piece 1,and by pairs of lugs 19 bearing the two wheels on cross member 2. The truck base is flat in profiles with longitudinal members 21 and 22 connected by cross pieces 23, 24, 25 and 26, of which 23 and 25 are equipped with telescopic extension with coaxial parts 27, 28, 29 and 30, and axial parts 31, 32, 33 and 34 with supported hollow forms 35, 36, 37 and 38 on the ends.

For the slanting regulation, corresponding systems of bores 40 are foreseen on the two pairs of bars of the hollow forms hinged on 39. The adjustment of the base form is reached by regulating the extensibility of the arms and by blocking with the screw means 41. The slant of the hollow forms is adjusted by introducing a pin in the corresponding bore pair. In this way, the pin transversally hits on the axial part. The truck on the ground runs on three wheels, of which wheel 42 has a pirouetting motion

- 4 -

on knuckle brackets 43 and foreseen on intermediate part of cross piece 26, and wheels 44 and 45 are foreseen on projecting brackets 46 and 47 to be blocked through wing nuts 48 and 49 on the back ends of the longitudinal members.

For mounting, the front part of the watercraft laying on the truck is at first lifted and put on the wheel couple 16; the, wheel carrier 43, blocked by means of split pin, is removed and the remaining part lifted by means of cross member 23; the assembly is let slide on the system of the three wheel pairs. Before the end of the trave, the outboarding brackets 46 and 47 are detached by means of wing nuts 46 and 47.

0086318

- 1 -

<u>Claims.</u>

1) Working assembly for supporting a watercraft on a motor vehicle, characterized by the fact that the operating assembly essentially consists of two components: a truck for supporting the watercraft which can be settled for the phase of the road transport, and truck carrier previously fitted on the car canopy. The components are then made integrally working with the transport means by retention cables or other.

2) Working assembly for supporting a watercraft on a motor vehicle, according to the previous claim, characterized by the fact that hauling is possible by means of a flat truck with rectangular base in profile which, for the movement, employs a pirouetting wheel on the intermediate part of the front cross member and, on the back ends of the longitudinal members, a pair of wheels supported on projecting angular brackets. The said wheel can be quickly released by screw desactivation of the fastening means.

3) Working assembly for supporting a watercraft on a motor vehicle, according to the previous claims, characterized by the fact that the adjustment of the truck to the shape of the watercraft to carry has been foreseen according to two subsequent phases: by axial extensibility for adjusting the setting base and by adjustment of the slant of the hollow devices to permit the containment of the settled means. For the base adjustment, two pairs of extensions are foreseen respectively in parallel and symmetrically projecting from the back cross member and the front intermediate one, and to be blocked in position. The condition of contact of the hollow devices, for obtaining the steady settling of the watercraft, can be reached by adjusting them when brought on the ends of the four extensions, and by stabilizing them through pins passing in correspinding bores.

4) Working assembly for supporting a watercraft on a motor vehicle, according to the previous claims, characterized by the fact that the support on the transport means in obtained through a truck carrier in profile which employs a pair of extensible cross members for the transversal adjustment and equipped on the ends with conventional scarfing components for fastening the assembly on the coachwork reliefs. These cross members bear above a pair of integral extensible longitudinal members for the longitudinal adjustment, supporting the back cross member bearing a pair of wheels near the upper ends. On the relevant longitudinal directrices, the two cross members bear other two pairs of wheels. For the employ, hauling is carried out by laying the truck below the watercraft and bringing the assembly on the ground in correspondence to the back side of the tansport means.

5) Working assembly for supporting a watercraft on a motor vehicle, according to the previous claims, characterized by the fact that the charging phase can be executed by lifting at first the front part of the truck and leaning it on the first pair of wheels. The front wheel carrier is then removed. Subsequently also the back part is lifted and the truck carrier is laid by sliding on the system of six wheel translation, taking care to detach the two back wheel bearers before the end of the travel. In this way, the two device components are in superimposition and are altogether acting as support of the watercraft. The integrally operating condition of the watercraft with the transport means can be obtained with conventional retention cables.

6) Working assembly for supporting a watercraft on a motor vehicle, according to the previous claims, characterized by the fact that the truck carrier employs -for the transversal adjustment- the pair of telescopic cross members with coaxial components 1 and2 and axial ones 3, 4, 5 and 6 equipped on the four ends wiht pieces 7 scarfing on the pair of longitudinal reliefs on the coachwork. The longitudinal adjustment is possible through the pair of telescopic longitudinal members with coaxial components 8 and 9 integrally supported by cross member 1 : from the axial profiles 10 and 11 are getting out from the front side, and are integrally brought on the end of cross piece 2. From the back side, axial profiles 12 and 13 are coming out which are connected on the ends by cross member 14: this one supports two wheels 16 on a pair of lugs. The sliding truck is completed by the pair of lugs 17 bearing the two wheels 18 on cross piece 1, and by pairs of lugs 19 bearing the two wheels on cross member 2.

7) Working assembly for supporting a watercraft on a motor vehicle, according to the previous claims, characterized by the fact that the truck base is flat in profiles with longitudinal members 21 and 22 connected by cross pieces 23,24,25 and 26, of which 23 and 25 are equipped with telescopic extensions wiht coaxial parts 27, 28, 29 and 30, and axial parts 31, 32, 33 and 34 with supported hollow forms 35, 36, 37 and 38 on the ends. For the slating regulation, corresponding systems of bores 40 are foreseen on the two pairs of bars of the hollow forms hinged on 39. The adjustment of the base form is resched by regulating the extensibility of the arms and by blocking with the screw means 41. The slant of the hollow forms is adjusted by introducing a pin in the corresponding bore pair. In this way, the pin transversally hits on the axial part. The truck on the ground runs on three wheels, of which wheel 42 has a pirouetting motion on knuckle brackets 43 and foreseen on intermediate part of cross piece 26, and wheels 44 and 4ç are foreseen on projecting brackets 46 and 47, to be blocked through wing nuts 48 and 49 on the back ends of the longitudinal members.

8) Working assembly for supporting a watercraft on a motor vehicle, according to the previou claims, characterized by the fact that for mounting, the front part of the watercraft laying on the truck is at first lifted and put on the wheel couple 16; then wheel carrier 43, blocked by means of split pin, is removed and the remaining part lifted by means of cross member 23; the assembly is then let slide on the systel of the three wheel pairs. Before the end of the travel, the outboarding brackets 46 and 47 are detached by means of wing nuts 46 and 47.

0086318

-1/1-

FIG.1

FIG.2

FIG.3

FIG.4

FIG.5

European Patent
Office

**EUROPEAN SEARCH REPORT**

Application number

EP 82 83 0031.9

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | |
| X | GB - A - 863 990 (A.V.R. HOOKER) <br> * fig. 1 to 4 * <br> -- | 1 | B 60 R 9/08 |
| X | GB - A - 2 076 347 (J.R. SMITH) <br> * fig. 2, 7B * <br> -- | 1 | |
| X | US - A - 4 058 243 (L.E. TAPPAN) <br> * fig. 1 to 4 * <br> ---- | 1 | |

TECHNICAL FIELDS
SEARCHED (Int.Cl. ³)

B 60 R 9/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | The present search report has been drawn up for all claims | |
|---|---|---|
| Place of search <br> Berlin | Date of completion of the search <br> 06-09-1982 | Examiner <br> BECKER |

EPO Form 1503.1 06.78